# FASCICULE DE BREVET EUROPEEN

(11) **EP 0 937 901 B1**
(45) Date de publication et mention de la délivrance du brevet: **25.05.2005**
(21) Numéro de dépôt: 99400391.1
(22) Date de dépôt: 18.02.1999
(51) Int. Cl.: F16C 33/66, F16C 19/52, F16C 33/58

(54) **Pilotage du jeu radial d'un roulement**
Kontrollvorrichtung des Radialspiels von einem Kugellager
Monitoring of the radial clearance in a ball bearing

(30) Priorité: 18.02.1998 FR 9801940
(43) Date de publication de la demande: 25.08.1999
(73) Titulaire: SNECMA MOTEURS, 75015 Paris (FR)
(72) Inventeur: Dusserre-Telmon, Guy, 77115 Sivry Courtry (FR); Plona, Daniel Georges, 77870 Vulaines sur Seine (FR)

(56) Documents cités:
- EP-A- 0 283 080
- EP-A- 0 664 424
- FR-A- 2 740 187
- US-A- 3 722 967
- US-A- 4 738 336
- US-A- 5 618 409
- PATENT ABSTRACTS OF JAPAN vol. 016, no. 331 (M-1282), 20 juillet 1992 & JP 04 095693 A (MITSUI SEIKI KOGYO CO LTD), 27 mars 1992

## Description

L'invention consiste à contrôler le jeu radial d'un roulement en régulant la quantité d'huile qui transite par sa bague extérieure drainée.

Certains roulements, notamment ceux qui travaillent à très grande vitesse de rotation, sont continuellement lubrifiés par un circuit spécial. L'huile s'écoule ordinairement hors du roulement en étant projetée à l'extérieur par les forces d'inertie que lui communiquent les éléments roulants. Il existe cependant une autre conception, dans laquelle l'huile sort du roulement en parcourant des conduits percés à travers une de ses bagues, généralement la bague extérieure. On dit que ce roulement (ou que cette bague) est drainé. Un intérêt de cette conception est de limiter ou même de supprimer les projections hors du roulement et donc de se passer d'écopes de récupération du lubrifiant disposées près de lui. Un avantage encore plus important est que la bague drainée est refroidie plus fortement par le lubrifiant. Or la bague extérieure d'un roulement tend souvent à s'échauffer plus fortement que l'autre et la différence de température entre les deux bagues peut être de plusieurs degrés en régime stable de rotation. Dans le cas usuel où c'est la bague extérieure qui est drainée, cet écart de température diminue, et donc le jeu que les dilatations thermiques différentielles créent autour des billes ou plus généralement des éléments roulants. On peut conclure qu'une application correcte du drainage permet de réduire le jeu du roulement.

Certains modes de construction des circuits de drainage ont été proposés par la demanderesse dans un brevet antérieur (FR 2 740 187 A). On s'intéresse ici aux moyens de réguler le débit drainé afin de modifier les conditions de fonctionnement du roulement et principalement son jeu radial.

L'invention consiste à pourvoir le circuit de drainage en moyens de réglage du débit de lubrifiant drainé afin d'ajuster en particulier le refroidissement de la bague drainée et le jeu du roulement.

Pour cela le circuit de drainage comporte des conduits de drainage traversant une bague, d'inclinaisons différentes en direction circonférentielle de la bague.

Plusieurs façons différentes de mise en oeuvre de l'invention ont été envisagées, comme on s'en apercevra aux commentaires des figures suivantes :
- la figure 1 est une vue générale d'un roulement drainé,
- la figure 2 est un diagramme justificatif de l'invention,
- la figure 3 illustre une conception particulière des conduits de drainage,
- la figure 4 est un diagramme justificatif de cette conception,
- et la figure 5 illustre une vanne à fermeture progressive.

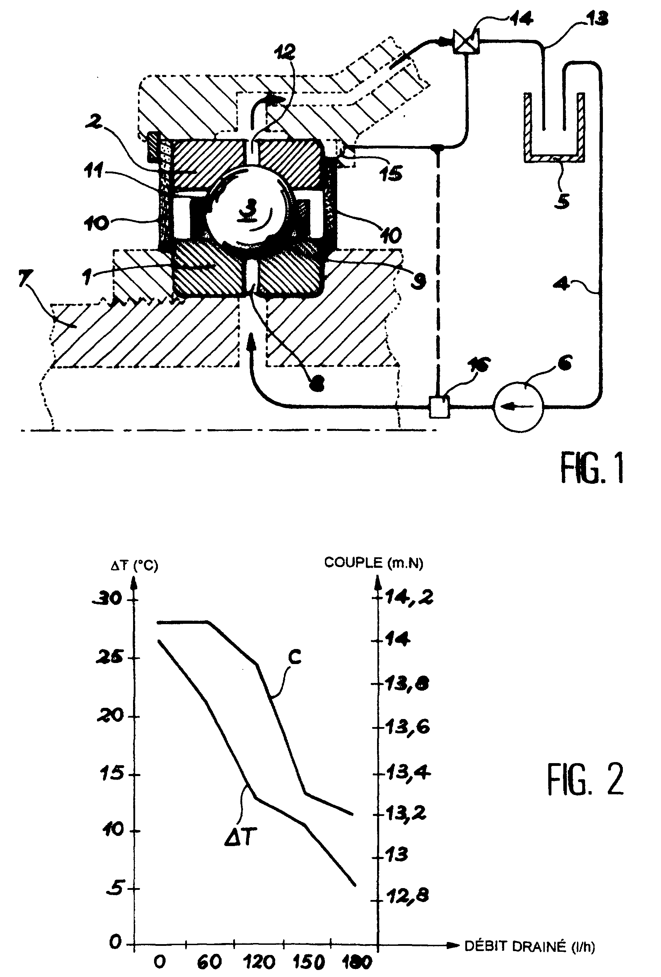

Le roulement de la figure 1 comprend une bague intérieure 1, une bague extérieure 2 et des éléments roulants tels que des billes 3 entre elles. Un circuit de lubrification comprend un circuit d'alimentation 4 originaire d'une bâche d' huile 5, qui porte une pompe 6 et se prolonge par exemple dans l'axe d'un arbre 7 autour duquel la bague intérieure 1 est enfilée, puis dans des conduits d'alimentation 8 d'orientation radiale qui traversent cette bague intérieure 1 et aboutissent devant les billes 3. L'huile s'écoule latéralement entre les billes 3 et la piste intérieure de roulement 9 et se dirige vers la bague extérieure 2 en continuant de contourner les billes 3. Avantageusement, des flasques latéraux 10 ferment le roulement et empêchent presque complètement des fuites d'huile. L'huile repoussée par les forces centrifuges tend donc à s'accumuler entre la piste extérieure de roulement 11 et les billes 3, mais des conduits de drainage 12 établis à travers la bague extérieure 2 lui permettent de s'écouler hors du roulement. Les conduits de drainage 12 sont la première partie d'un circuit de drainage 13 qui aboutit à la bâche 5 -où l'huile se déverse avant d'être remise en circulation- et comprend, selon l'invention, une vanne 14 qui peut prendre plusieurs états d'ouverture ou de fermeture et permet donc de limiter le débit d'huile traversant le circuit de drainage 13. La figure 2 prouve que l'augmentation du débit drainé réduit le couple C de roulement produit par les frottements , et qu'elle réduit aussi la différence de température ΔT entre les bagues 1 et 2 et donc le jeu dans le roulement. Afin de contrôler ce jeu qui est un paramètre important de la dynamique d'ensemble de la ligne d'arbre, une régulation du débit drainé est introduite, qui varie avec les circonstances de fonctionnement.

Cette régulation peut être réalisée de manière active ou bien passive selon les propositions ci-après: Une régulation active comportera une vanne qui peut ainsi être commandée par un capteur de température 15 placé sur la bague extérieure 2 ou bien sur le circuit de retour du lubrifiant 13, qui ouvre progressivement la vanne tant qu'une température jugée juste tolérable est atteinte sur la bague extérieure 2, et permet à la vanne 14 de se refermer peu à peu quand cette température n'est plus atteinte ; on pourrait aussi envisager de remplacer le capteur 15 par un autre, placé de la même façon, qui mesurerait les vibrations infligées à la bague extérieure 2 pour ouvrir la vanne 14 si les vibrations atteignaient un seuil et la refermer dans le cas contraire, car on a vu que le défaut de drainage produisait des dilatations thermiques plus importantes de la bague extérieure 2, et donc des jeux dans le roulement qui suscitaient l'apparition de vibrations ; dans une autre conception encore, la vanne 14 pourrait être commandée par un tachymètre 16 mesurant la vitesse de rotation de l'arbre 7 pour réduire peu à peu le débit drainé quand la vitesse de rotation augmente.

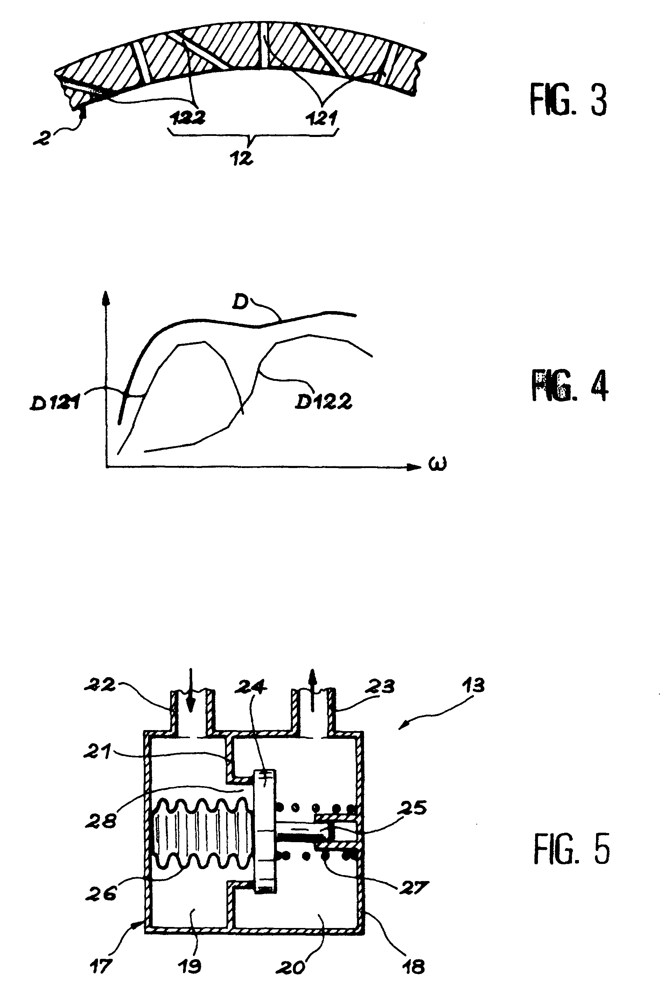

Une particularité du drainage provient de ce qu'il est plus ou moins facile selon les vitesses de rotation, l'huile entrant plus ou moins facilement dans les conduits de drainage 12. On peut alors proposer un drainage à régulation passive avec une construction comme celle de la figure 3, où les conduits de drainage 12 comprennent des conduits radiaux 121 alternant avec des conduits inclinés 122 ; l'inclinaison de ces derniers conduits peut être de 80° sur des rayons de roulement, c'est-à-dire qu'ils sont presque tangents à la bague extérieure 2.

La figure 4 montre que les débits de drainage maximaux offerts par les groupes de conduits de drainage sont très variables en fonction de la vitesse de rotation et ne permettent en réalité de drainer convenablement que sur une étendue de vitesse relativement faible : la courbe D121 montre que les conduits de drainage radiaux 121 (à faible inclinaison) sont convenables aux faibles vitesses de rotation, alors que la courbe correspondante D122 montre que les conduits de drainage 122 très inclinés permettent de drainer convenablement aux vitesses de rotation plus élevées. Mais la courbe de débit drainé totale D, obtenue en superposant les deux débits, est à peu près horizontale pour la plupart des vitesses de rotation considérées, ce qui montre qu'un débit de drainage constant pourra en général être obtenu, de même que toute autre allure caractéristique du débit drainé en fonction du régime qui serait dictée par des considérations d'efficacité de la turbo-machine. L'idée de diviser les conduits de drainage 12 en groupes d'inclinaisons distinctes peut évidemment être étendue à d'autres inclinaisons et d'autres nombres de groupes. Le circuit de drainage 13 peut être dimensionné afin d'obtenir des rendements différents en fonction du régime de rotation.

La vanne de réglage de débit peut cependant n'être pas commandée par un système de mesure comprenant un capteur : la figure 5 montre une vanne 17 automatique pouvant remplacer la vanne 14. Elle consiste en un boîtier 18 divisé en une chambre amont 19 et une chambre aval 20 par une cloison 21, et des conduits 22 et 23 d'entrée et de sortie de lubrifiant, faisant partie du circuit de drainage 13, communiquent respectivement à ces deux branches 19 et 20.

Un bouchon 24 est mobile dans l'une des chambres 20, devant une ouverture 28 de la cloison 21, et ses mouvements sont réglés par une tige 25 coulissante à laquelle il est fixé, un soufflet 26 rempli de gaz qui le sépare du boîtier 18 du côté de la chambre amont 19 et un ressort 27 qui le repousse contre le soufflet 26. Celui-ci se dilate quand la température du lubrifiant s'élève et repousse le bouchon 24 de la cloison 21 malgré le ressort 27. Quand l'échauffement du lubrifiant diminue, le soufflet 26 se contracte et le bouchon 24 est repoussé dans le sens opposé vers la cloison 21 et étrangle progressivement le passage de lubrifiant par l'ouverture 28, qu'il peut d'ailleurs obstruer complètement en se plaquant sur la cloison 21 ; la vanne 17 est alors fermée. La fermeture et l'ouverture dépendent de la température du lubrifiant, et il en va donc de même du débit drainé.

Enfin, il faut remarquer que le lubrifiant sortant de la bague extérieure 2, ou plus généralement de la bague drainée, est à une assez forte pression (plusieurs bars en pratique), ce qui peut être exploité en branchant un appareil ou un autre mécanisme sur le circuit de drainage 13, que cette énergie de pression fait fonctionner : il peut s'agir d'un palier fluide disposé près du roulement, dans la disposition révélée dans la demande de brevet antérieure susmentionnée.

## Revendications

1. Circuit de drainage (13) de lubrifiant hors d'un roulement (1, 2, 3), comprenant des conduits de drainage (121, 122) traversant une bague (2) du roulement, **caractérisé en ce que** les conduits de drainage (121, 122) ont des inclinaisons différentes en direction circonférentielle de la bague (2) de façon à régler le débit de lubrifiant drainé.

2. Circuit de drainage de lubrifiant selon la revendication 1, **caractérisé en ce que** les conduits de drainage sont inclinés avec des angles différents afin de cumuler leurs caractéristiques spécifiques de rendement.

3. Circuit de drainage de lubrifiant selon l'une quelconque des revendications 1 ou 2, **caractérisé en ce qu'**il comprend une vanne à fermeture progressive.

4. Circuit de drainage de lubrifiant selon la revendication 3, **caractérisé en ce que** la vanne à fermeture progressive comprend un élément actionneur (26) se déformant selon la température.

5. Circuit de drainage (13) de lubrifiant hors d'un roulement (1, 2, 3), selon la revendication 1, **caractérisé en ce qu'**il est dimensionné afin d'obtenir des rendements différents en fonction du régime de rotation.

## Patentansprüche

1. Dränagekreis (13) für Schmiermittel außerhalb eines Kugellagers (1, 2, 3), der Dränageleitungen (121, 122) aufweist, die durch einen Ring (2) des Lagers hindurch verlaufen,
**dadurch gekennzeichnet,**
**dass** die Dränageleitungen (121, 122) unterschiedliche Neigungen in Richtung der Umfangslinie des Rings (2) aufweisen, so dass die Durchsatzmenge des dränierten Schmiermittels reguliert wird.

2. Dränagekreis für Schmiermittel nach Anspruch 1,
**dadurch gekennzeichnet,**
**dass** die Dränageleitungen in unterschiedlichen Winkeln geneigt sind, um ihre jeweiligen Leistungskennlinien zu kumulieren.

3. Dränagekreis für Schmiermittel nach Anspruch 1 oder 2,
**dadurch gekennzeichnet,**
**dass** er ein stufenlos schließendes Ventil aufweist.

4. Dränagekreis für Schmiermittel nach Anspruch 3,
**dadurch gekennzeichnet,**
**dass** das stufenlos schließende Ventil ein Betätigungselement (26) enthält, das sich abhängig von der Temperatur verformt.

5. Dränagekreis (13) für Schmiermittel außerhalb eines Kugellagers (1, 2, 3) nach Anspruch 1,
**dadurch gekennzeichnet,**
**dass** er so bemessen ist, dass er je nach Drehzahl unterschiedliche Leistungen erzielt.

## Claims

1. Lubricant drainage circuit (13) external to a rolling bearing (1, 2, 3), comprising drainage channels (121, 122) passing through a race (2) of the rolling bearing, **characterized in that** the drainage channels (121, 122) have different inclinations in the circumferential direction of the race (2) to regulate the flow of drained lubricant.

2. Lubricant drainage circuit according to Claim 1, **characterized in that** the drainage channels are inclined at different angles to cumulate their specific performance characteristics.

3. Lubricant drainage circuit according to either of Claims 1 and 2, **characterized in that** it includes a gradual shut-off valve.

4. Lubricant drainage circuit according to Claim 3, **characterized in that** the gradual shut-off valve includes an actuating component (26) that deforms according to the temperature.

5. Lubricant drainage circuit (13) external to a rolling bearing (1, 2, 3) according to Claim 1, **characterized in that** it is dimensioned to obtain different performance characteristics depending on the rotational speed.
